# EUROPÄISCHE PATENTSCHRIFT

(11) **EP 2 883 738 B1**
(45) Veröffentlichungstag und Bekanntmachung des Hinweises auf die Patenterteilung: **01.07.2020**
(21) Anmeldenummer: 14002599.0
(22) Anmeldetag: 25.07.2014
(51) Int. Cl.: B60K 37/06, G06F 3/01, G06F 3/03, G06F 3/042, G06F 3/0482, G06F 3/0484

(54) **Verfahren und Anordnung zum Steuern von Funktionen eines Kraftfahrzeugs**
Method and assembly for controlling functions of a motor vehicle
Procédé et système de commande de fonctions d'un véhicule automobile

(30) Priorität: 12.12.2013 DE 102013020795
(43) Veröffentlichungstag der Anmeldung: 17.06.2015
(73) Patentinhaber: MAN Truck & Bus SE, 80995 München (DE)
(72) Erfinder: Dörner, Karlheinz, 85757 Karlsfeld (DE); Michel, Britta, 81675 München (DE); Zimmermann, Andreas, 80995 München (DE)
(74) Vertreter: Liebl, Thomas

(56) Entgegenhaltungen:
- DE-A1-102009 038 333
- US-A1- 2013 063 336
- US-A1- 2013 076 615

## Beschreibung

Gegenstand der Erfindung ist ein Verfahren zum Steuern von Funktionen eines Kraftfahrzeugs oder darin enthaltener Aggregate, bei dem die Bewegung der Hand und/oder der Finger und/oder des Daumens mittels einer in der Umgebung des Lenkrades angeordneten Sensoreinheit erfasst wird und bei Korrelation der Bewegungen mit vordefinierten Bewegungen, dies als eine Betätigung wenigstens eines virtuellen, real aber nicht vorhandenen Bedienelements gewertet wird. Weiter gehört es zur Erfindung, eine Anordnung zur Durchführung des Verfahrens anzugeben.

In Kraftfahrzeugen, insbesondere in Nutzfahrzeugen ist es heute üblich, eine Vielzahl von Funktionen vorzusehen, die notwendigerweise durch Eingaben des Fahrers aktiviert, deaktiviert oder in ihren Parametern verändert werden müssen. Solche Funktionen sind beispielsweise Komfortfunktionen wie Klimaanlage, Sitzverstellung, Lenkradverstellung oder Multimediafunktionen, wie das Einstellen von Radiosendern, das Abspielen von gespeicherten Sprach- oder Musikinhalten oder Navigationsfunktionen, wie das Eingeben von anzufahrenden Zielen, das Aktivieren von Suchfunktionen, zum Beispiel um Tankstellen zu finden. Die vorstehende Aufzählung ist nur beispielhaft zu verstehen, es sind selbstverständlich sehr viele weitere hier nicht genannte Funktionen denkbar, die vom Fahrer einzustellen und/ oder deren Einstellparameter zu verändern sind.

In der Vergangenheit wurden für solche Aktivierung- bzw. Einstellaufgaben real vorhandene Einstellelemente wie Schalter, Drehknöpfe, Taster, Steuerkreuze, Scroll-Räder, Scroll-Bänder und vieles mehr verwendet. Bei der heute üblichen Vielzahl von Funktionen und Einstellparametern ist es nicht mehr möglich, alle diese Schaltelemente vernünftig in einem Kraftfahrzeug unterzubringen. Es wurde deshalb bereits vorgeschlagen, Funktionen und Einstellparameter über auf einem Bildschirm dargestellte Menüs auszuwählen und dafür nur ein gemeinsames Eingabeelement, wie ein Steuerkreuz, ein Scroll-Rad mit Tastfunktion oder einen berührungsempfindlichen Bildschirm zu verwenden. Solche Anordnungen sind bereits serienmäßig verfügbar und bedürfen keiner näheren Erläuterung.

Ein anderer Weg die angesprochene Vielzahl von einstellbaren Funktionen und Einstellparametern zu bewältigen wird mit der sogenannten Gestenerkennung beschritten. Eine derartige Anordnung bzw. ein derartiges Verfahren ist unter der Bezeichnung Handzeichen-Schaltvorrichtung in der DE 103 49 568 A1 beschrieben. Es handelt sich dabei um eine Anordnung, die über eine Sensorik die Gesten einer Hand erfasst und in Schaltsignale umsetzt. Zu diesem Zweck ist im Dachbereich eines Kraftfahrzeugs die Sensoreinheit zur Gestenerfassung angeordnet und nach unten auf die Hand des Fahrers gerichtet. Neben dem Lenkrad, beabstandet zu diesem ist ein Erfassungsbereich vorgesehen, innerhalb dessen die Bewegungen der Hand des Fahrers mittels der Sensoreinheit erfasst und über eine Auswerteeinheit in Steuersignale umgesetzt werden. Ähnliche Anordnungen und Verfahren beschreiben die DE 10 2006 009 291 A1 und die DE 10 2009 046 376 A1. bei der letztgenannten ist vorgesehen, dass die auszuwählenden Funktionen oder Parameter auf einem sogenannten Head-Up-Display dargestellt und durch Fingerzeig ausgewählt werden können, wobei das Zeigen auf die auszuwählenden Funktionen oder den auszuwählenden Parameter durch den Fahrer von einer Sensoreinheit erfasst und über eine Auswerteelektronik in einen Schaltbefehl umgesetzt wird.

Problematisch ist bei den vorstehend genannten Anordnungen und Verfahren, das einerseits zur Gesteneingabe die Hand des Fahrers vom Lenkrad genommen werden muss (DE 103 49 568 A1 und DE 10 2009 046 376 A1), was die Verkehrssicherheit negativ beeinflusst und dass andererseits eine große Anzahl von Gesten erlernt werden und von der Sensoreinheit und Auswerteeinrichtung detektiert werden muss (DE 103 49 568 A1 und DE 10 2006 009 291 A1), was einen erhöhten Lernaufwand für den Fahrer und eine entsprechend hohe Rechenleistung bei der Auswerteeinrichtung erfordert. Darüber hinaus besteht das Problem, dass frei im Raum ausgeführte Gesten einer gewissen Ungenauigkeit unterliegen, was die Erkennung solcher Gesten bei allen vorstehend genannten Anordnungen bzw. Verfahren zusätzlich erschwert.

Das Dokument US 2013/076615 A1 offenbart den Oberbegriff des Anspruchs 1.

Aufgabe der Erfindung ist es, unter Vermeidung der vorstehend angesprochenen Nachteile bereits vorhandener Verfahren und Anordnungen ein Verfahren und eine Anordnung anzugeben, die bei minimalem Aufwand für die Erkennung der Geste und minimalen Aufwand für das Erlernen der durch den Fahrer auszuführenden Gesten eine sichere gestengestützte Auswahl von Funktionen und eine sichere Parametereinstellung durch den Fahrer eines Kraftfahrzeugs insbesondere Nutzfahrzeugs erlaubt ohne die Verkehrssicherheit negativ zu beeinflussen.

Gelöst wird die Aufgabe durch die kennzeichnenden Merkmale eines Verfahrens gemäß Anspruch 1 und die kennzeichnenden Merkmale einer Anordnung gemäß Anspruch besonders vorteilhafte Weiterbildungen sind in den jeweils abhängigen Ansprüchen gekennzeichnet.

Bei der Lösung der Aufgabe wurde von der Überlegung ausgegangen, dass die zu erkennenden Bewegungen bzw. Gesten einerseits in Kontakt mit einem realen das heißt physisch vorhandenen Gegenstand ausgeführt werden und andererseits der Betätigungsbewegung eines realen Eingabeelementes nachgebildet sind. Die Vorteile einer solchen Lösung liegen auf der Hand. Dadurch, dass Gesten bzw. Bewegungen in Kontakt mit einem realen das heißt physisch vorhandenen Gegenstand ausgeführt werden, ist die Variationsbreite gleicher Gesten bzw. Bewegungen sehr gering, da bei der Ausführung der Geste bzw. Bewegung gewissermaßen eine Führung durch den realen Gegenstand gegeben ist. Die Beschränkung auf Bewegungen die einer Betätigungsbewegung eines realen Bedienelementes nachgebildet sind, reduziert die Gesten auf ein minimales Maß und erlaubt ein intuitives Erlernen durch den Fahrer.

Im Vorstehenden wie auch nachfolgend werden die Begriffe "Bewegung" und "Geste" verwendet, gemeint ist damit im Falle von Bewegungen ein dynamischer Vorgang, im Falle von Gesten ein statischer Vorgang. Wenn also nachfolgend von Bewegung der Hand und/oder der Finger und/oder des Daumens die Rede so handelt es sich um eine dynamische Bewegungen, ist von einer Gesten der Hand und/oder der Finger und/oder des Daumens die Rede ist, so soll darunter verstanden werden, dass es sich um einen statischen Vorgang handelt, also eine bestimmte statische Hand-, Finger- oder Daumenhaltung als Betätigungsinformation für das virtuelle Bedienelement dient.

Für das erfindungsgemäße Verfahren hat es sich als besonders vorteilhaft erwiesen, dass das wenigstens eine virtuelle Bedienelement am Lenkrad definiert ist, und dass mittels der auf das Lenkrad gerichteten Sensoreinheit und einer Auswerteeinheit die Bewegungen bzw. Gesten in Verbindung mit dem Lenkrad ausgewertet werden. Zu diesem Zweck erfasst die Sensoreinheit in wenigstens einem am Lenkrad vordefinierten Bereich Bewegung bzw. Gesten der Hand und/oder der Finger und/oder des Daumens und leitet diese an eine Auswerteeinheit weiter. Unter dem Begriff Sensoreinheit wird dabei ganz allgemein jede Art von Sensor verstanden, der geeignet ist die angesprochenen Bewegungen bzw. Geste zu erfassen. Insbesondere kann es sich um eine oder mehrere Mono- oder Stereokameras, Infrarotsensoren, Ultraschallsensoren, Radarsensoren handeln. Derartige Sensoranordnungen sind im Stand der Technik allgemein bekannt, so dass sich eine ausführliche Beschreibung erübrigt.

Die Auswerteeinheit, an die die Sensoreinheit die erfassten Bewegungen bzw. Geste weiterleitet, überprüft, ob die fraglichen Bewegung bzw. Geste relativ zum Lenkrad in einem vordefinierten Bereich des Lenkrades ausgeführt wurden. Ist dies der Fall, vergleicht die Auswerteeinheit die erfasste Bewegungen bzw. Geste mit wenigstens einem vordefinierten gespeicherten Muster. Wird bei diesem Vergleich Übereinstimmung mit dem wenigstens einen Muster festgestellt, löst die Auswerteeinheit einen vordefinierten Schaltschritt aus. Bei der Auswerteeinheit handelt es sich, wie in solchen Fällen üblich, um ein auf einem Computer implementiertes Programm, das die Steuerschritte Datenübernahme von der Sensoreinheit, Feststellung ob eine Bewegung bzw. Geste relativ zum Lenkrad in einem vordefinierten Bereich des Lenkrades ausgeführt wurde, Vergleich der Bewegung bzw. Geste mit gespeicherten Mustern und Auslösen eines Schaltschrittes nacheinander ausführt.

Um die Auswertung von Bewegungen bzw. Gesten zu vereinfachen und so den apparativen Aufwand zu minimieren ist es von Vorteil, die Sensoreinheit so auszubilden, dass diese eine Information an die Auswerteeinheit liefert, ob die Hand und/oder der Finger und/oder der Daumen im vordefinierten Bereich zu dem Lenkrad ist und dass die Auswerteeinheit im Falle, dass die Hand und/oder der Finger und/oder der Daumen im Bereich zu dem Lenkrad ist, relativ zum Lenkrad ausgeführte erfasste Bewegungen bzw. Geste mit wenigstens einem vordefinierten gespeicherten Muster vergleicht. Dies kann dadurch geschehen, dass die Sensoreinheit nur den relevanten Bereich des Lenkrades zum Beispiel aus unterschiedlichen Richtungen erfasst, derart, dass klar unterscheidbar ist, dass sich die Hand und/oder der Finger und/oder der Daumen im fraglichen Bereich zu dem Lenkrad befinden.

Alternativ besteht die Möglichkeit, einen separaten Sensor vorzusehen, der eine Information an die Auswerteeinheit liefert, ob die Hand und/oder der Finger und/oder der Daumen im vordefinierten Bereich zu dem Lenkrad ist. Dabei kann es sich zum Beispiel um eine Kontaktsensor, zum Beispiel einen kapazitiven Sensor handeln, der eine Information an die Auswerteeinheit liefert, dass die Hand und/oder der Finger und/oder der Daumen im vordefinierten Kontaktbereich zu dem Lenkrad ist. Ein solcher Kontaktsensor vereinfacht die Sensoreinheit vorteilhaft, weil die Erfassung der Bewegung bzw. Geste der Hände und/oder der Finger und/oder der Daumen nur aus einem Blickwinkel erforderlich ist. Selbstverständlich besteht alternativ hierzu die Möglichkeit eine automatische Entfernungsmessung zu dem Daumen (dem Finger, der Hand) durchzuführen, der die Bewegung oder Geste ausführt. Entsprechende Ultraschall-, Laser- oder Radarmesseinrichtungen sind bekannt.

Um den wenigstens einen am Lenkrad vordefinierten Bereich vom übrigen Lenkrad unterscheidbar zu machen ist es vorteilhaft, diesen als haptisch und/ oder visuell unterscheidbare Markierung auszubilden. Dabei kann die haptische Unterscheidbarkeit vorteilhaft durch fühlbare Einkerbungen und/ oder Muster und/ oder Materialunterschiede erreicht werden. Für die visuelle Unterscheidbarkeit ist es von Vorteil, die Markierung durch sichtbare Kontur und/ oder Muster und/ oder Farbmarkierungen zu bilden. Besonders vorteilhaft ist eine Kombination aus haptischer und visueller Unterscheidbarkeit, indem fühlbare Merkmale mit sichtbaren Merkmalen kombiniert werden.

Um die Bewegungs- bzw. Gestenerfassung weiter zu vereinfachen und den Fahrer von Überlegungen zu befreien, wo am Lenkrad die Bewegungen bzw. Gesten auszuführen sind, ist es vorteilhaft, den wenigstens einen am Lenkrad vordefinierten Bereich unabhängig vom Lenkeinschlag des Lenkrades festzulegen, derart, dass dieser bei Lenkeinschlägen an der Stelle verharrt, die er bei Geradeausfahrstellung des Lenkrades einnimmt.

Weiter besteht vorteilhaft die Möglichkeit, den wenigstens einen am Lenkrad vordefinierten Bereich durch Aufprojizieren einer Lichtmarkierung sichtbar zu machen. Hierzu bietet sich jede Art von Lichtquelle an, die eine visuell wahrnehmbare Lichtmarke erzeugt. Eine solche Vorgehensweise erleichtert es dem Fahrer erheblich, die Bewegung bzw. Geste an der richtigen Stelle relativ zum Lenkrad auszuführen, so dass dessen Aufmerksamkeit nicht unnötig vom Verkehrsgeschehen abgelenkt wird. Projektionseinrichtungen der angesprochenen Art sind zum Beispiel aus Anwendungen mit sogenannten Haed-Up-Displays bekannt, auch in vielen anderen technischen Bereichen werden Projektionseinrichtungen verwendet, so dass sich eine ausführliche Beschreibung solcher Projektionseinrichtungen erübrigt.

Weiter ist es von Vorteil, wenn die Lichtmarkierung die Kontur eines realen Bedienelementes aufweist. Damit wird erreicht, dass unterschiedliche Arten von Bedienelementen dargestellt werden können, was in vorteilhafter Weise dem Fahrer die Art der auszuführenden Geste bzw. Bewegung bereits durch die Art des dargestellten Bedienelementes suggeriert, so dass der Lernaufwand für den Fahrer und der Aufwand für die Erkennung der Bewegung bzw. Geste vorteilhaft minimiert werden.

Besonders einfach bedienbar sind bekanntermaßen sogenannte Scroll-Räder, es ist daher von besonderem Vorteil, wenn die Lichtmarkierung die Kontur eines Scroll-Rades aufweist und die gespeicherten Bewegungsmuster den Bewegungen bei der Bedienung eines realen Scroll-Rades entsprechen. Es wird so vorteilhaft erreicht, dass der Fahrer bei der Bedienung intuitiv auf ihm bekannte Bewegungsmuster zurückgreift und die Bewegungs- bzw. Gestenerkennung vorteilhaft auf diese einfachen, gut unterscheidbaren Bewegungen bzw. Gesten beschränkt werden kann.

Um durch Lenkbewegungen bedingte Bewegungen der Finger und/ oder Hände und/ oder Daumen nicht irrtümlich als Bewegungen bzw. Gesten bei der Auswahl von Funktionen oder Parameter auszuwerten ist es vorteilhaft, das Verfahren so zu gestalten, dass die Auswerteeinheit nur Muster auswertet, wenn der Lenkwinkel und/ oder die Lenkwinkeländerung pro Zeiteinheit unter einem vorgegebenen Schwellenwert liegt. Hierzu wird zum Beispiel ein Lenkwinkelsensor verwendet, der mit der Auswerteeinheit wirkverbunden ist, so dass diese eine Auswertung von Gesten bzw. Bewegungen unterdrücken kann, wenn der Lenkwinkel und/ oder die Lenkwinkeländerung pro Zeiteinheit einen vorgegebenen Schwellenwert übersteigt. Als Lenkwinkelsensoren kommen alle Arten von Drehwinkelgebern in Frage, gleich nach welchem physikalischen Prinzip (zum Beispiel induktiv, kapazitiv, optisch, Hall-Effekt) diese arbeiten. Besonders vorteilhaft sind digitale Drehwinkelgeber, deren Ausgangssignal von der Auswerteeinheit direkt auswertbar ist.

Um dem Fahrer eine Rückmeldung über das erfolgreiche Bedienen des virtuellen Bedienelementes zu geben ist es von Vorteil, wenn eine mit der Auswerteeinheit wirkverbundene Feedback-Einheit vorgesehen ist, die bei Auslösen eines Schaltschrittes eine akustische und/ oder eine optische und/ oder eine haptische Rückmeldung abgibt.

Für die Auswertung der Bewegungen bzw. Gesten ist es vorteilhaft, diese anhand ihrer Startposition und/ oder Bewegungsrichtung und/ oder Bewegungsgeschwindigkeit und/ oder Änderung der Bewegungsgeschwindigkeit und/ oder Endposition und/ oder Form zu identifizieren.

Weiter ist es von Vorteil, die Auswertung der relativ zum Lenkrad ausgeführten Bewegung bzw. Geste durch eine Eingangsgeste bzw. Bewegung und/ oder eine akustische Eingabe zu starten. Auf diese Weise wird der die Bewegungs- bzw. Gestenerkennung durchführende Rechner weniger belastet. Im Falle von Eingangsgesten bzw. Bewegungen muss zunächst nur auf eine spezifischen Geste bzw. Bewegung hin überwacht werden und erst nach deren Erkennung auf eine Mehrzahl von Bewegungen bzw. Gesten hin. Im Falle einer akustischen Starteingabe ist die Gesten- bzw. Bewegungserkennung nur nach dieser und nur für einen begrenzten Zeitraum aktiviert. In beiden Fällen wird Rechenleistung eingespart.

Zur Durchführung des Verfahrens ist es vorteilhaft, wenigstens eine auf das Lenkrad gerichtete Sensoreinheit vorzusehen, die aus einem oder mehreren Sensoren bestehen kann. Als Sensoren kommen alle Anordnungen in Frage, die in der Lage sind Bewegungen oder Gesten aus der Distanz zu erfassen. Darunter fallen sowohl Einzelsensoren wie Sensorarrays, die, wie bereits oben erwähnt, nach unterschiedlichen physikalischen Prinzipien arbeiten können. Es sind sowohl Bildaufnehmer, wie sie in Kameras verwendet werden, als auch akustische Sensoren, insbesondere Ultraschallsensoren, optische Sensoren insbesondere Infrarotsensoren oder Radarsensoren denkbar.

Für die Auswertung der durch die Sensoreinheit erfassten Bewegungen bzw. Gesten ist vorteilhaft eine Auswerteeinheit vorgesehen, die Bewegung bzw. Gesten der Hand und/oder der Finger und/oder des Daumens in Verbindung mit dem Lenkrad auswertet. Nach dem heutigen Stand der Technik wird eine solche Auswerteeinheit üblicherweise als Steuerroutine programmgestützt auf einer Recheneinheit ausgeführt, die in heute üblichen Kraftfahrzeugen insbesondere Nutzfahrzeugen bereits enthalten ist.

Die Sensoreinheit und die Auswerteeinheit sind wirkverbunden, so dass die durch die Sensoreinheit erfassten Bewegungen bzw. Gesten von der Auswerteeinheit übernommen und analysiert werden. Bei der Analyse der Gesten bzw. Bewegungen wird vorteilhaft so vorgegangen, dass die Auswerteeinheit relativ zum Lenkrad ausgeführte erfasste Muster von der Geste bzw. Bewegung mit wenigstens einem vordefinierten gespeicherten Muster vergleicht. Wird bei dieser Analyse eine Übereinstimmung festgestellt, löst die Auswerteeinheit einen dieser Bewegung bzw. Geste zugeordneten vordefinierten Schaltschritt aus.

In besonders vorteilhafter Weiterbildung der Anordnung kann, wie bereits oben ausgeführt, eine Feedback-Einheit mit der Auswerteeinrichtung verbunden sein. Diese Rückmeldeeinrichtung kann so ausgebildet sein, dass bei der Ausführung eines einer erkannten Bewegung bzw. Geste zugeordneten Schaltschrittes durch die Auswerteeinheit, diese ein Ausgangssignal an die Feedback-Einheit abgibt, wodurch diese ihrerseits ein optisches und/ oder akustisches und/ oder haptisches Signal erzeugt. Bei dem optischen Signal kann es sich um ein Lichtsignal handeln, das besonders vorteilhaft durch die oben erwähnte Projektionseinheit erzeugt wird oder den Wechsel der Darstellung auf einer Anzeige. Selbstverständlich kann auch eine akustische Signalgabe erfolgen, die je nach ausgeführtem Schaltschritt in Frequenz, Länge, Tonfolge unterschiedlich sein kann. Auch eine Sprachausgabe kann in diesem Zusammenhang besonders vorteilhaft sein. Alternativ oder ergänzend ist auch eine haptische Signalgabe denkbar, zum Beispiel indem das Lenkrad und/ oder der Fahrersitz vibriert, wenn der Schaltschritt ausgeführt ist.

Ist der Schaltschritt ein Scrollen durch ein Menü oder eine Parameterauswahl aus einem Menü, wird natürlich als optisches Signal die Darstellung einer alphanumerischen Anzeige auf einem Bildschirm oder einem Head-Up-Display wechseln, hier ist es sinnvoll und damit vorteilhaft, einen Schaltschritt ergänzend durch ein Tonsignal zu quittieren.

Das vorstehend beschriebene Verfahren, sowie die beschriebene Anordnung lassen sich vorteilhaft allgemein in Fahrzeugen, insbesondere auch in Nutzfahrzeugen einsetzen. Weitere Ausgestaltungen und Vorteile der Erfindung werden nachfolgend anhand der Zeichnungen näher erläutert, es zeigen:
- Fig. 1: Eine Prinzipdarstellung einer Anordnung zur Durchführung des Verfahrens zum Steuern von Funktionen eines Kraftfahrzeugs
- Fig. 2: Ein Beispiel zur Auswahl von Funktionen bzw. Parametern
- Fig. 3: Ein erstes Beispiel für virtuelle Bedienelemente
- Fig. 4: Ein zweites Beispiel für virtuelle Bedienelemente

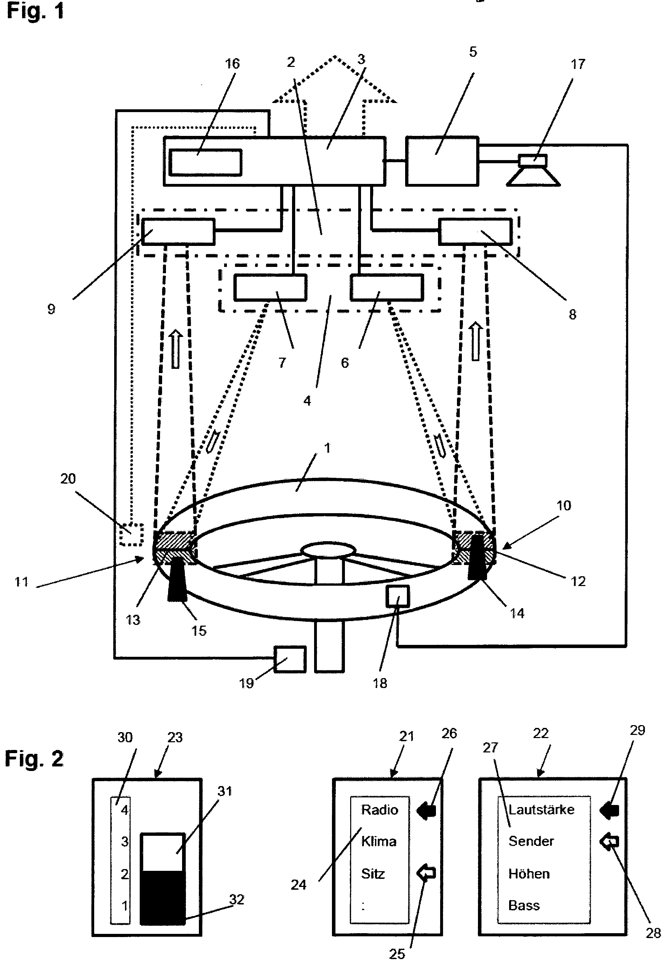

In der Prinzipdarstellung gemäß Fig. 1 ist ein Lenkrad 1 dargestellt, auf das von oben her eine Sensoreinheit 2 gerichtet ist. Ebenfalls von oben her in Richtung Lenkrad 1 zeigend, ist eine Projektionseinheit 4 angeordnet. Sowohl die Sensoreinheit 2 als auch die Projektionseinheit 4 sind mit einer Auswerteeinheit 3 verbunden. Die Auswerteeinheit 3 ihrerseits weist eine erste Verbindung zu einer Feedback-Einheit 5 auf und ist darüber hinaus mit einem Lenkwinkelsensor 19 verbunden. Weiter kann auch noch eine Verbindung von der Auswerteeinheit 3 zu einem Kontaktsensor 20 vorgesehen sein. Die Feedback-Einheit 5 ist ihrerseits mit einem Lautsprecher 17 verbunden und weist eine weitere Verbindung zu einem Vibrationselement 18 auf, dass im Lenkrad 1 oder an diesem angeordnet ist und das Lenkrad 1 in Vibration versetzen kann. Die Projektionseinheit 4 besteht im gewählten Beispiel aus zwei Projektoren, einem ersten Projektor 6 und einen zweiten Projektor 7. Beide Projektoren 6, 7 weisen eine Verbindung zur Auswerteeinheit 3 auf. Die Projektoren 6, 7 sind auf das Lenkrad 1 gerichtet und projizieren auf dieses ein erstes virtuelles Bedienelemente 12 und ein zweites virtuelles Bedienelemente 13. Die beiden virtuellen Bedienelemente 12, 13 sind einander gegenüberliegend, jeweils rechts und links auf dem Kranz des Lenkrades 1 angeordnet. Im gewählten Beispiel bestehen die virtuellen Bedienelemente 12, 13 aus zwei gegeneinander abgegrenzten Bereichen, was in der Darstellung gemäß Fig. 1 durch eine jeweils unterschiedliche Schraffur angedeutet ist. Um die unterschiedlichen Bereiche für den Fahrer erkennbar zu machen, können diese zum Beispiel in unterschiedlicher Farbgebung durch die Projektoren 6, 7 auf das Lenkrad 1 aufprojiziert werden. Um nun Bewegungen bzw. Gesten, die relativ zu den aufprojizierten virtuellen Bedienelementen 12, 13 ausgeführt werden, erfassen zu können, sind die erste Kamera 8 auf das erste virtuelle Bedienelement 12 und die zweite Kamera 9 auf das zweite virtuelle Bedienelement 13 gerichtet. Der Aufnahmewinkel der Kameras 8, 9 ist dabei jeweils so gewählt, dass sie im wesentlichen nur die virtuellen Bedienelemente 12, 13 erfassen, der erste Erkennungsbereich 10 also mit dem ersten virtuellen Bedienelement 12 und der zweite Erkennungsbereich 11 mit dem zweiten virtuellen Bedienelement 13 korrespondiert.

Zu den vorstehend angesprochenen Komponenten Auswerteeinheit 3 und Feedback-Einheit 5 ist anzumerken, dass es sich hier nicht um abgrenzbare Hardwareeinheiten handelt, sondern vielmehr um Funktionseinheiten, die durch Programme realisiert sind, die ihrerseits auf einer Recheneinheit implementiert sind.

Um nun die Funktionsweise der in Fig. 1 dargestellten Anordnung näher zu erläutern, wird nachfolgend in Verbindung mit Fig.1 auf das in Fig. 2 dargestellte Beispiel zurückgegriffen. Dabei zeigt Fig. 2 ein Hauptmenü 21, ein erstes Untermenü 22 und ein zweites Untermenü 23. Im Hauptmenü 21 ist eine Liste von Komponenten dargestellt die in heute üblicher Weise durchs Scrollen durch diese Liste ausgewählt werden können. Das erste Untermenü 22 zeigt eine Reihe von Funktionen, die im Hinblick auf die Komponente "Radio" aus dem Hauptmenü 21 eingestellt werden können. Auch aus der Liste von Funktionen des ersten Untermenüs 22 ist die gewünschte Funktion wiederum durch Scrollen durch die Liste einstellbar. Das zweite Untermenü 23 zeigt eine Parameterdarstellung für die Lautstärke, die zu den aus den ersten Untermenü 22 auswählbaren Funktionen gehört. Auch hier ist eine Parametereinstellung mit einer Scroll-Funktion realisiert. Für das nachstehend zu beschreibende Beispiel ist angenommen, dass die Auswahl der Komponente gemäß Hauptmenü 21 und die Auswahl der Funktion gemäß ersten Untermenü 22 mit dem in der Fig. 1 auf der rechten Seite dargestellten ersten virtuellen Bedienelement 12 und die Parametereinstellung im zweiten Untermenü 23 mit dem in der Fig. 1 links dargestellten zweiten virtuellen Bedienelement 13 bewerkstelligt wird. Weiter ist angenommen, dass sich das Hauptmenü 21 durch einen Sprachbefehl über ein in Fig. 1 nicht dargestelltes Mikrofon aktivieren lässt und dass die Projektoren 6, 7 und Kameras 8, 9 gemäß Fig. 1 durch eine übergeordnete Steuereinheit (nicht dargestellt) über die Auswerteeinheit 3 aktiviert werden, je nachdem welche Steuerung die jeweils dargestellten Menüs 21, 22, 23 erfordern.

In Verbindung mit dem Beispiel gemäß Fig. 2 wird nun nachfolgend der Vorgang "Veränderung der Lautstärke des Radios" näher beschrieben. Zunächst aktiviert der Fahrer durch den Sprachbefehl "Hauptmenü" die Darstellung des Hauptmenüs 21 auf einer Anzeige. Bei der Anzeige kann es sich sowohl um eine konventionelle Bildschirmanzeige, zum Beispiel einen LCD- Bildschirm handeln, als auch um ein sogenanntes Head-Up-Display. Mit der Darstellung des Hauptmenüs 21 auf der Anzeige wird gleichzeitig der erste Projektor 6 aktiviert, der das erste virtuelle Bedienelemente 12 auf das Lenkrad 1 projiziert. Gleichzeitig mit dem Aktivieren des ersten Projektors 6 wird die erste Kamera 8 eingeschaltet und die Auswertung des durch die erste Kamera 8 gelieferten Bildes mittels der Auswerteeinheit 3 gestartet. Wie in Fig. 2 dargestellt, zeigt ein pfeilförmiger Indikator in einer ersten Pfeilposition 25 im Hauptmenü 21 auf den Begriff "Sitz" der für Sitzverstellung steht. Um nun den Pfeil entlang der Komponenten-Liste 24 zu bewegen benutzt der Fahrer seinen rechten Daumen 14 und zeigt mit diesem auf den in der Fig. 1 oberen Bereich des ersten virtuellen Bedienelementes 12 oder führt alternativ eine Scroll-Bewegung mit dem Daumen vom unteren Bereich in den oberen Bereich aus. Die Kamera 8 nimmt diese Bewegung oder diese Geste auf und übermittelt das Muster an die Auswerteeinheit 3, die dieses Muster mit im Speicher 16 der Auswerteeinheit 3 vorgehaltenen Mustern vergleicht und bei Übereinstimmung einen Schaltschritt in der Weise ausführt, dass auf der Anzeigeeinrichtung, auf der das Hauptmenü 21 dargestellt ist, der ersten pfeilförmigen Indikator von der ersten Pfeilposition 25 um eine Position nach oben rückt. Durch Wiederholen der Bewegung mit dem rechten Daumen 14 lässt sich der pfeilförmige Indikator jeweils einen Schritt weiter nach oben schieben und steht dann in der Pfeilposition 26 dem Begriff "Radio" auf der Komponentenliste 24 gegenüber. Jede Bewegung des pfeilförmigen Indikators ist dabei durch einen Schaltschritt ausgelöst, den die Auswerteeinheit 3 erzeugt. Ein Schaltschritt wird jeweils von einem Quittungston begleitet, den die Auswerteinheit 3 über die Feedback-Einheit 5 und den Lautsprecher 17 erzeugt.

Um nun die Komponente Radio auszuwählen, ist in dem vorliegenden Beispiel vorgesehen, dass der rechte Daumen 14 des Fahrers in der zuletzt eingenommenen Position verharrt bis eine taktile Rückmeldung in der Weise erfolgt, dass die Auswerteeinheit 3 über die Feedback Einheit 5 das Vibratorelement 18 ansteuert und so das Lenkrad 1 in Schwingungen versetzt, die von einem Tonsignal aus dem Lautsprecher 17 begleitet wird. Mit Auswahl der Komponente "Radio" verschwindet das Hauptmenü 21 von der Anzeige und es wird das erste Untermenü 22 dargestellt. Wie bereits erwähnt, beinhaltet das erste Untermenü 22 eine Funktionen-Liste und einen Pfeil als Indikator, der in der dritten Pfeilposition 28 der aktuell ausgewählten Funktion "Sender", die für die Sendereinstellung steht, gegenüber dargestellt ist. Um nun zur Funktion "Lautstärke" zu gelangen bringt der Fahrer seinen Daumen 14 in den oberen Bereich des ersten virtuellen Bedienelementes 12 oder bewegt den Daumen 14 alternativ von dem unteren Bereich des ersten virtuellen Bedienelementes 12 in dessen oberen Bereich. Auch diese Geste bzw. Bewegung wird über die erste Kamera 8 an die Auswerteeinheit 3 übermittelt, von dieser mit in dem Speicher 16 vorgehaltenen Mustern verglichen und bei festgestellter Übereinstimmung mit einem solchen Muster der zugehörige Schallschritt ausgelöst. Im vorliegenden Fall verschiebt der ausgelöste Schaltschritt den pfeilförmigen Indikator in dem ersten Untermenü 22 um einen Schritt nach oben, so dass dieser nun in der Pfeilposition 29 der Funktion "Lautstärke" gegenübersteht. Da es sich um die gewünschte Funktion handelt, verbleibt der Fahrer mit den rechten Daumen 14 in der zuletzt eingenommenen Positionen, so dass nach Verstreichen einer vorgegebenen Zeit die Farbe des Pfeils in der Anzeige von hell nach dunkel Wechsel und die Auswerteeinheit 3 über die Feedback-Einheit 5 das Vibratorelement 18 im Lenkrad ansteuert und über den Lautsprecher 17 einen Tonsignal abgibt.

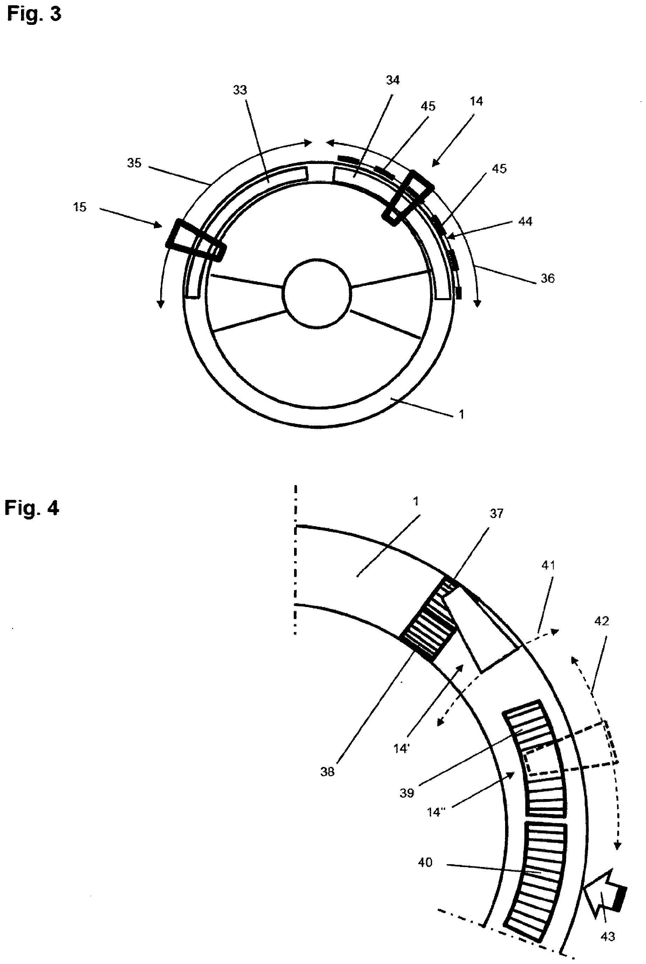

Abweichend vom vorstehend beschriebenen Beispiel lässt sich natürlich das Auswählen einer Funktion durch ganz unterschiedliche Gesten verwirklichen. An Stelle des Verharrens in der zuletzt eingenommenen Position kann das einmalige oder mehrmalige Antippen des Lenkrades als Auswahl-Geste vorgesehen sein. Insbesondere das Antippen des Lenkradkranzes mit der Hand von außen radial nach innen gerichtet, wie dies durch den Gesten-Pfeil 43 in Fig. 4 angedeutet ist, lässt sich mit einer über dem Lenkrad angeordneten Sensorik sicher erfassen. Besonders ergonomisch ist auch das Tippen mit dem Daumen von oben oder seitlich auf das zuvor mit einer Daumengeste bediente virtuelle Scrollrad.

Nach erfolgter Auswahl der Funktion "Lautstärke" verschwindet das Untermenü 22 von der Anzeige und es wird stattdessen das zweite Untermenü 23 dargestellt. Mit der Darstellung des zweiten Untermenüs 23 deaktiviert eine nicht dargestellte externe Steuereinheit den ersten Projektor 6 sowie die erste Kamera 8 über die Auswerteeinheit 3 und aktiviert den zweiten Projektor 7 und die zweite Kamera 9. Der aktivierte zweite Projektor 7 projiziert nun das zweite virtuelle Bedienelemente 13 auf das Lenkrad 1. Wie bereits erwähnt, handelt es sich bei dem zweiten Untermenü 23 um eine Lautstärkensanzeige, die auf der linken Lautstärke-Skala 30 vier Lautstärkestufen anzeigt und daneben einen ersten Lautstärke-Indikator 31 der die derzeit eingestellte Lautstärke symbolisiert. Um nun die Lautstärke um eine Stufe zu reduzieren bewegt der Fahrer seinen linken Daumen 15 in den unteren Bereich des auf der linken Seite des Lenkrades 1 angeordneten zweiten virtuellen Bedienelementes 13 oder führt alternativ mit dem linken Daumen 15 eine Bewegung vom oberen Teil des zweiten virtuellen Bedienelementes 13 in den unteren Teil aus. Diese Bewegung oder Geste wird von der zweiten Kammer 9 an die Auswerteeinheit 3 übermittelt, von dieser mit in dem Speicher 16 vorgehaltenen Mustern verglichen und bei Übereinstimmung in einen Schaltschritt übergeführt in der Weise, dass die Lautstärke des Radios um eine Stufe reduziert wird. Dies geschieht sowohl auf der Anzeige indem der zweite Lautstärke-Indikator 32 an Stelle des ersten Lautstärkeindikators 31 dargestellt wird, als auch durch Reduzieren der Lautstärke des Radios um einen Schritt. Hierzu ist es selbstverständlich erforderlich, dass zwischen der Auswerteeinheit 3 und der Steuerung des Radios (nicht dargestellt) eine Wirkverbindung besteht. Diese Wirkverbindung, die notwendig ist um jede Art von Eingabe über ein virtuelles Bedienelement in einen realen Schaltschritt umzusetzen ist in der Fig.1 durch einen von der Auswerteeinheit 3 ausgehenden Pfeil symbolisiert der die Auswerteeinheit 3 mit einer zentralen Steuereinheit (nicht dargestellt) oder gegebenenfalls mit Untereinheiten (nicht dargestellt) verbindet. Eine solche Verbindung ist heute üblicherweise durch ein Bus-System, zum Beispiel einen CAN-Bus verwirklicht.

Wie oben ausgeführt, befindet sich am Lenkrad 1 bzw. an der Lenksäule ein Lenkwinkelsensor 19 der die Auswertung des aktuellen Lenkwinkels, sowie dessen Änderung pro Zeiteinheit durch die Auswerteinheit 3 gestattet. Übersteigt der Lenkwinkel bzw. dessen zeitliche Änderung einen Grenzwert, unterbricht die Auswerteeinheit 3 einen zu diesem Zeitpunkt laufenden Erfassungsvorgang für die Betätigung eines virtuellen Bedienelementes 12, 13 und gibt über die Feedback-Einheit 5 und den Lautsprecher 6 sowie gegebenenfalls über das Vibrationselement 18 ein Signal aus.

Neben den in Verbindung mit Fig. 1 beschriebenen virtuellen Bedienelementen sind selbstverständlich eine Reihe anderer Gestaltungen solcher Bedienelemente denkbar. Einige Beispiele hierzu sind in den Fig. 3 und 4 dargestellt.

Das in Fig. 3 gezeigte Lenkrad 1 verfügt über ein erstes langgestecktes bogenförmiges Bedienelement 33 im linken oberen Viertel des Lenkrades 1 und ein zweites langgestecktes bogenförmiges Bedienelement 34 im rechten oberen Viertel des Lenkrades 1. Betätigt werden die Bedienelemente 33, 34 auch in diesem Fall mithilfe der Daumen 14, 15 des Fahrers. Dies bietet sich an, weil beim Umschließen des Lenkrades 1 mit den Händen die Daumen auf dem Lenkrad 1 obenauf liegen. Die Bedienelemente in diesem Beispiel unterscheiden sich von den in Verbindung mit Fig. 1 beschriebenen dadurch, dass sie einen relativ großen Winkelbereich des Lenkrades 1 einnehmen. Dies kann dann von Vorteil sein, wenn mit einer Scroll-Bewegung sehr schnell durch eine Bildschirmliste navigiert werden soll. Hierzu ist es erforderlich, dass beim Überstreichen der Bedienelemente 33, 34 nicht nur ein Schaltschritt der einen Cursor-Schritt zur Folge hat ausgeführt wird sondern eine Mehrzahl solcher Schritte. Die langgestreckt bogenförmigen virtuellen Bedienelemente 33, 34 verhalten sich demnach wie ein Scroll-Band, wenn dieses von den Daumen 14, 15 so bewegt würde, wie es die Richtungspfeile 35, 36 für die virtuellen Bedienelemente 33, 34 vorsehen.

Selbstverständlich besteht auch die Möglichkeit, ein virtuelles Scroll-Band 44 am Lenkradkranz tangential außen anzuordnen, die Bedienung erfolgt dann nicht mit dem Daumen sondern durch Überstreichen des Lenkradkranzes mit der Hand. Ein so angeordnetes Bedienelement lässt sich durch Aufprojizieren nur schlecht kenntlich machen, es ist daher bei einem so angeordneten virtuellen Scroll-Band sinnvoll, haptisch fühlbare Marken 45 vorzusehen. Diese drehen sich natürlich mit dem Lenkrad 1 mit, was bei der Bedienung zu beachten ist. Die Auswertung der relativ zum virtuellen Scroll-Band 44 ausgeführten Bewegungen erfolgt, wie bei allen ortsfest zum Lenkrad 1 angeordneten virtuellen Bedienelementen, unter Beachtung des Drehwinkels des Lenkrades zum Beispiel in der Weise, dass die die Geste erfassende Kamera unabhängig vom Lenkeinschlag auf den Teil des Lenkrades gerichtet bleibt, der die haptisch fühlbare Marken 45 trägt. Als weitere Möglichkeit lässt sich die Lenkbewegung als überlagerte Bewegung aus der relativ zum Lenkrad ausgeführten Bewegung eliminieren. Zur Lenkwinkelerfassung wird dabei der Lenkwinkelsensor 19 (Fig. 1) verwendet. Eliminiert man nun bei der Auswertung die mit Hilfe des Lenkwinkelsensors 19 ermittelte Lenkbewegung aus der gesamten durch die Kamera erfassten Bewegung, bleibt die relativ zu dem virtuellen Scroll-Band ausgeführte Bewegung übrig und wird zur Gestenerkennung herangezogen.

Eine weitere Form virtueller Bedienelemente zeigt Fig. 4. Dort ist das Lenkrad 1 in Teildarstellung gezeigt und weist im oberen Bereich ein erstes rechteckiges virtuelles Bedienelement 37 und ein zweites rechteckiges virtuelles Bedienelement 38 auf. Bedient werden diese beiden Bedienelemente 37, 38 mit dem Daumen 14' der rechten Hand in der Weise, dass der Fahrer mit dem Daumen 14' entlang des Richtungspfeils 41 die Bedienelemente 37, 38 entweder in dieser Reihenfolge überstreicht oder in der gegenläufigen Reihenfolge. Der Daumen 14' führt also eine Bewegung aus, die der Bewegung bei der Bedienung eines Scroll-Rades weitgehend entspricht. Auf diese Weise lässt sich zum Beispiel eine Bildschirmliste von links nach rechts scrollen, bzw. von rechts nach links. Um die Scroll- Bewegung für den Fahrer intuitiv erlernbar zu machen, ist es natürlich sinnvoll, die quer zur Lenkradkontur bedienbaren virtuellen Bedienelemente 37, 38 für das horizontale Scrollen vorzusehen und das vertikale Scrollen mit virtuellen Bedienelementen zu bewerkstelligen, die so angeordnet sind, dass sie mit einer im wesentlichen tangential zum Lenkrad 1 ausgeführten Bewegung zu bedienen sind. Solche Bedienelemente sind in der Fig. 4 im unteren Teil des Lenkrades 1 dargestellt, dort befindet sich ein erstes virtuelles bogenförmiges Bedienelement 39 und ein zweites virtuelles bogenförmiges Bedienelement 40. Die Bedienung der Bedienelemente 39, 40 erfolgt durch eine Bewegung, die der Richtungspfeil 42 symbolisiert, also indem der auf dem Lenkrad aufliegende Daumen 14" zusammen mit der Hand entlang der Lenkradkontur bewegt wird.

Unterstrichen werden kann der Scrollrad-Charakter der vorstehend angesprochenen virtuellen Bedienelemente dadurch, dass die aufprojizierte oder fest auf dem Lenkrad angeordnete Markierung im Aussehen und/ oder Haptik einem realen Scrollrad nachgebildet ist.

Die im vorstehenden in Verbindung mit Fig. 4 beschriebene Form der Bedienung mittels einer Bewegung ist für das erfindungsgemäße Verfahren natürlich nicht zwingend. Es ist genauso gut vorstellbar diese Bedienelemente mit einer statischen Geste zu bedienen. Hierzu berührt der Fahrer mit dem Daumen 14', 14" seiner rechten Hand eines der virtuellen Bedienelemente 37, 38, 39, 40 so lange, bis zum Beispiel ein Quittungston über einen Lautsprecher abgegeben wird, was einem Schaltschritt entspricht. Verbleib der Daumen in der eingenommenen Position wird nach dem nächsten Quittungston ein weiterer Schaltschritt ausgeführt. Ein Schaltschritt kann beispielsweise darin bestehen, dass ein Indikator (Cursor) auf einer Anzeige um einen Schritt weiter durch eine Liste bewegt wird oder auch darin, dass ein Parameter einer Funktion um einen Schritt geändert wird. Soll die auf einem Display angezeigte Auswahl akzeptiert werden, genügt es, den Daumen vom virtuellen Bedienelement zu nehmen. Alternativ kann natürlich auch durch ein- oder mehrmaliges kurzes antippen die Auswahlbestätigt werden.

In der vorstehend beschriebenen Variante verhält sich die Anordnung gemäß Fig. 4 wie ein sogenanntes Steuerkreuz, also wie eine Wipp-Taste, die in vier zueinander senkrecht stehenden Richtungen betätigt werden kann.

Selbstverständlich sind die Möglichkeiten, virtuelle Bedienelemente am Lenkrad eines Fahrzeugs vorzusehen, mit den vorstehend aufgezeigten Beispielen nicht ausgeschöpft. Es sind vielmehr vielfältigste Variationen von Bedienelementen denkbar insbesondere ist es vorteilhaft, dass je nach Funktion, der die jeweils auf das Lenkrad projizierten Bedienelemente dienen, deren Form und Anordnung unterschiedlich ist. Gleichfalls kann es vorteilhaft sein, dass Eingriffsmöglichkeiten durch den Fahrer vorgesehen sind, der Gestalt, dass er Einfluss auf die Art der Darstellung und insbesondere auch auf den Ort der Darstellung der virtuellen Bedienelemente auf dem Lenkrad nehmen kann. Hierzu können entsprechende Eingriffsmöglichkeiten an der Projektionseinrichtung vorgesehen sein, die zum Beispiel eine Anpassung an die bevorzugte Handstellung des Fahrers am Lenkrad ermöglichen.

Handelt es sich, wie weiter oben bereits angesprochen, um ortsfest am Lenkrad angeordnete virtuelle Bedienelemente, sind alle Formen von haptisch und/ oder visuell vom übrigen Lenkrad unterscheidbare Markierungen zu deren Kennzeichnung denkbar. Für die haptische Unterscheidbarkeit bieten sich insbesondere durch fühlbare Einkerbungen und/ oder Muster und/ oder Materialunterschiede viele Möglichkeiten der Gestaltung während für die visuelle Unterscheidbarkeit insbesondere sichtbare Kontur und/ oder Muster und/ oder Farbmarkierungen eine Vielzahl von Ausgestaltungsmöglichkeiten eröffnen.

### Bezugszeichenliste

- 1: Lenkrad
- 2: Sensoreinheit
- 3: Auswerteeinheit
- 4: Projektionseinheit
- 5: Feedback-Einheit
- 6: erster Projektor
- 7: zweiter Projektor
- 8: erste Kamera
- 9: zweite Kamera
- 10: erster Erkennungsbereich
- 11: zweiter Erkennungsbereich
- 12: erstes virtuelles Bedienelement
- 13: zweites virtuelles Bedienelement
- 14: rechter Daumen
- 15: linker Daumen
- 16: Musterspeicher
- 17: Lautsprecher
- 18: Vibrationselement
- 19: Lenkwinkelsensor
- 20: Kontaktsensor
- 21: Hauptmenü
- 22: erstes Untermenü
- 23: zweites Untermenü
- 24: Komponentenliste
- 25: erste Pfeilposition
- 26: zweite Pfeilposition
- 27: Funktionen-Liste
- 28: dritte Pfeilposition
- 29: vierte Pfeilposition
- 30: Lautstärke-Skala
- 31: erster Lautstärke-Indikator
- 32: zweiter Lautstärke-Indikator
- 33: erstes langgestrecktes bogenförmiges virtuelles Bedienelement
- 34: zweites langgestrecktes bogenförmiges virtuelles Bedienelement
- 35: erster Richtungspfeil
- 36: zweiter Richtungspfeil
- 37: erstes rechteckiges virtuelles Bedienelement
- 38: zweites rechteckiges virtuelles Bedienelement
- 39: erstes bogenförmiges virtuelles Bedienelement
- 40: zweites bogenförmiges virtuelles Bedienelement
- 41: dritter Richtungspfeil
- 42: vierter Richtungspfeil
- 43: Gesten-Pfeil
- 44: virtuelles Scroll-Band
- 45: fühlbare Marken

## Patentansprüche

1. Verfahren, zum Steuern von Funktionen eines Kraftfahrzeugs oder darin enthaltener Aggregate, bei dem die Bewegung oder Geste der Hand und/oder der Finger und/oder des Daumens mittels einer in der Umgebung des Lenkrades angeordneten Sensoreinheit erfasst wird und bei Korrelation der Bewegungen oder Gesten mit vordefinierten Bewegungen oder Gesten dies als eine Betätigung wenigstens eines virtuellen, real aber nicht vorhandenen Bedienelements gewertet wird, **dadurch gekennzeichnet, dass** das wenigstens eine virtuelle Bedienelement (12, 13, 33, 34, 37, 38, 38, 40) am Lenkrad (1) definiert ist, und dass mittels der auf das Lenkrad (1) gerichteten Sensoreinheit (2) und einer Auswerteeinheit (3) die Bewegung oder Gesten in Verbindung mit dem Lenkrad (1) ausgewertet werden, derart, dass
- die Sensoreinheit (2) in wenigstens einem am Lenkrad (1) vordefinierten Bereich Bewegungen oder Gesten der Hand und/oder der Finger und/oder des Daumens erfasst, die in Kontakt mit dem realen Lenkrad ausgeführt werden, und an eine Auswerteeinheit (3) weiterleitet,
- die Auswerteeinheit (3) relativ zum Lenkrad (1) ausgeführte erfasste Bewegungen oder Gesten mit wenigstens einem vordefinierten gespeicherten Muster vergleicht und
- die Auswerteeinheit (3) bei vordefinierter Übereinstimmung mit dem wenigstens einen Muster einen vordefinierten Schaltschritt auslöst.

2. Verfahren nach Anspruch 1, **dadurch gekennzeichnet, dass** die Sensoreinheit (2) eine Information an die Auswerteeinheit (3) liefert, ob die Hand und/oder der Finger und/oder der Daumen im vordefinierten Bereich zu dem Lenkrad (1) ist und dass die Auswerteeinheit (3) im Falle, dass die Hand und/oder der Finger und/oder der Daumen im Bereich zu dem Lenkrad (1) ist, relativ zum Lenkrad (1) ausgeführte erfasste Bewegungen oder Gesten mit wenigstens einem vordefinierten gespeicherten Muster vergleicht.

3. Verfahren nach Anspruch 1, **dadurch gekennzeichnet, dass** ein separater Kontaktsensor (20) eine Information an die Auswerteeinheit (3) liefert, ob die Hand und/oder der Finger und/oder der Daumen im vordefinierten Kontaktbereich zu dem Lenkrad (1) ist und dass die Auswerteeinheit (3) im Falle, dass die Hand und/oder der Finger und/oder der Daumen im Kontaktbereich zu dem Lenkrad (1) ist, relativ zum Lenkrad (1) ausgeführte erfasste Bewegungen oder Geste mit wenigstens einem vordefinierten gespeicherten Muster vergleicht.

4. Verfahren nach Anspruch 1, **dadurch gekennzeichnet, dass** der wenigstens eine am Lenkrad (1) vordefinierte Bereich als haptisch und/ oder visuell vom übrigen Lenkrad unterscheidbare Markierung ausgebildet ist.

5. Verfahren nach Anspruch 4, **dadurch gekennzeichnet, dass** die haptische Unterscheidbarkeit durch fühlbare Einkerbungen und/ oder Muster und/ oder Materialunterschiede gegeben ist.

6. Verfahren nach Anspruch 4, **dadurch gekennzeichnet, dass** die visuelle Unterscheidbarkeit durch sichtbare Kontur und/ oder Muster und/ oder Farbmarkierungen gegeben ist.

7. Verfahren nach Anspruch 1, **dadurch gekennzeichnet, dass** der wenigstens eine am Lenkrad (1) vordefinierte Bereich unabhängig vom Lenkeinschlag des Lenkrades (1) ist, derart, dass dieser bei Lenkeinschlägen an der Stelle verharrt, die er bei Geradeausfahrstellung des Lenkrades (1) einnimmt.

8. Verfahren nach Anspruch 1, **dadurch gekennzeichnet, dass** der wenigstens eine am Lenkrad (1) vordefinierte Bereich durch Aufprojizieren einer Lichtmarkierung sichtbar gemacht ist.

9. Verfahren nach Anspruch 4 oder 8, **dadurch gekennzeichnet, dass** die Markierung die Kontur eines realen Bedienelementes aufweist.

10. Verfahren nach Anspruch 4 oder 8, **dadurch gekennzeichnet, dass** die Markierung die Kontur eines Scroll-Rades aufweist.

11. Verfahren nach Anspruch 1, **dadurch gekennzeichnet, dass** die gespeicherten Bewegungsmuster im Wesentlichen der Bewegung bei der Betätigung eines Scroll-Rades entsprechen.

12. Verfahren nach Anspruch 11, **dadurch gekennzeichnet, dass** die Auswerteeinheit (3) nur Bewegungsmuster auswertet, die im Wesentlichen einer Scroll-Bewegung an einem realen Scroll-Rad entsprechen.

13. Verfahren nach Anspruch 1, **dadurch gekennzeichnet, dass** die Auswerteeinheit (3) nur Muster auswertet, wenn der Lenkwinkel und/ oder die Lenkwinkeländerung pro Zeiteinheit unter einem vorgegebenen Schwellenwert liegt.

14. Verfahren nach Anspruch 1, **dadurch gekennzeichnet, dass** die Auswerteeinheit (3) mit einer Feedback-Einheit (5) wirkverbunden ist derart, dass bei Auslösen eines Schaltschrittes eine akustische und/ oder eine optische und oder eine haptische Rückmeldung erfolgt.

15. Verfahren nach Anspruch 1, **dadurch gekennzeichnet, dass** die Auswertung der relativ zum Lenkrad (1) ausgeführten Bewegung oder Gesten anhand deren Startposition und/ oder Bewegungsrichtung und/ oder Bewegungsgeschwindigkeit und/ oder Änderung der Bewegungsgeschwindigkeit und/ oder Endposition und/ oder Form erfolgt.

16. Verfahren nach Anspruch 1, **dadurch gekennzeichnet, dass** die Auswertung der relativ zum Lenkrad (1) ausgeführten Bewegung oder Geste durch eine Eingangsgeste und/ oder eine akustische Eingabe gestartet wird.

17. Anordnung zur Durchführung des Verfahrens, **dadurch gekennzeichnet, dass**
- wenigstens eine Sensoreinheit (2) vorgesehen ist,
- die Sensoreinheit (2) auf das Lenkrad (1) gerichtet ist,
- eine Auswerteeinheit (3) vorgesehen ist, die Bewegung oder Gesten der Hand und/oder der Finger und/oder des Daumens in Verbindung mit dem Lenkrad (1) ausgewertet,
- die Sensoreinheit (2) in wenigstens einem am Lenkrad (1) vordefinierten Bereich Bewegungen oder Gesten der Hand und/oder der Finger und/oder des Daumens erfasst, die in Kontakt mit dem realen Lenkrad ausgeführt werden, und an die Auswerteeinheit (3) weiterleitet,
- die Auswerteeinheit (3) relativ zum Lenkrad (1) ausgeführte erfasste Bewegungen oder Gesten mit wenigstens einem vordefinierten gespeicherten Muster vergleicht und
- die Auswerteeinheit (3) bei Übereinstimmung mit dem wenigstens einem Muster einen vordefinierten Schaltschritt auslöst.

18. Anordnung nach Anspruch 17, **dadurch gekennzeichnet, dass** die Sensoreinheit (2) selbst so ausgebildet ist, dass sie detektiert ob die Hand und/oder der Finger und/oder der Daumen im vordefinierten Kontaktbereich zu dem Lenkrad (1) ist.

19. Anordnung nach Anspruch 17, **dadurch gekennzeichnet, dass** wenigstens eine Projektionseinheit (4) vorgesehen ist, die auf das Lenkrad (1) gerichtet ist und schaltbar den vordefinierten Bereich durch Aufprojizieren einer Lichtmarkierung auf dem Lenkrad (1) sichtbar macht.

20. Anordnung nach Anspruch 17, **dadurch gekennzeichnet, dass** am Lenkrad (1) eine Leuchteinrichtung vorgesehen ist, die schaltbar den vordefinierten Bereich durch Aufleuchten einer Lichtmarkierung auf dem Lenkrad (1) sichtbar macht.

21. Anordnung nach Anspruch 17, **dadurch gekennzeichnet, dass** ein Lenkwinkelsensor (19) vorgesehen ist, der den Lenkwinkel und/ oder die Lenkwinkeländerung pro Zeiteinheit an die Auswerteeinheit (3) übergibt und dass die Auswerteeinheit (3) überprüft ob der Lenkwinkel und/ oder die Lenkwinkeländerung pro Zeiteinheit unter einem vorgegebenen Schwellenwert liegt und dass bei überschrittenem Schwellenwert die Auswerteeinheit erfasste Muster unterdrückt.

22. Anordnung nach Anspruch 17, **dadurch gekennzeichnet, dass** eine Feedback-Einheit (5) vorgesehen ist, die bei Auslösen eines Schaltschrittes durch die Auswerteeinheit (3) eine akustische und/ oder eine optische und oder eine haptische Rückmeldung veranlasst.

23. Fahrzeug, insbesondere Nutzfahrzeug, in dem ein Verfahren nach einem der Ansprüche 1 bis 16 zur Anwendung kommt oder das eine Anordnung gemäß einem der Ansprüche 17 bis 22 umfasst.

## Claims

1. Method for controlling functions of a motor vehicle or assemblies contained therein, in which the movement or gesture of the hand and/or the fingers and/or the thumb is captured by way of a sensor unit arranged in the vicinity of the steering wheel and, upon correlation of the movements or gestures with predefined movements or gestures, this is evaluated as an actuation of at least one virtual operating element that is real yet not present, **characterized in that** the at least one virtual operating element (12, 13, 33, 34, 37, 38, 38, 40) is defined on the steering wheel (1) and **in that** the movement or gestures are evaluated in connection with the steering wheel (1) by way of the sensor unit (2), which is directed at the steering wheel (1), and an evaluation unit (3) such that
- the sensor unit (2) captures movements or gestures of the hand and/or the fingers and/or the thumb that are performed in contact with the real steering wheel in at least one region predefined on the steering wheel (1) and passes them on to an evaluation unit (3),
- the evaluation unit (3) compares captured movements or gestures performed relative to the steering wheel (1) to at least one predefined stored pattern and
- the evaluation unit (3) triggers a predefined switching step in the case of a predefined match to the at least one pattern.

2. Method according to Claim 1, **characterized in that** the sensor unit (2) provides information to the evaluation unit (3) relating to whether the hand and/or the finger and/or the thumb is located in the predefined region with respect to the steering wheel (1) and **in that**, if the hand and/or the finger and/or the thumb is located in the region with respect to the steering wheel (1), the evaluation unit (3) compares captured movements or gestures performed relative to the steering wheel (1) to at least one predefined stored pattern.

3. Method according to Claim 1, **characterized in that** a separate contact sensor (20) provides information to the evaluation unit (3) relating to whether the hand and/or the finger and/or the thumb is located in the predefined contact region with respect to the steering wheel (1) and **in that**, if the hand and/or the finger and/or the thumb is located in the contact region with respect to the steering wheel (1), the evaluation unit (3) compares captured movements or gestures performed relative to the steering wheel (1) to at least one predefined stored pattern.

4. Method according to Claim 1, **characterized in that** the at least one region predefined on the steering wheel (1) is embodied as a mark that is able to be differentiated haptically and/or visually from the remaining steering wheel.

5. Method according to Claim 4, **characterized in that** the haptic differentiability is implemented by way of notches and/or patterns and/or material differences that are able to be detected by touch.

6. Method according to Claim 4, **characterized in that** the visual differentiability is implemented by way of visible contour and/or patterns and/or colour markings.

7. Method according to Claim 1, **characterized in that** the at least one region predefined on the steering wheel (1) is independent of the steering angle position of the steering wheel (1) such that, if the steering angle position changes, said region remains in the same location that it has in the straight-ahead position of the steering wheel (1).

8. Method according to Claim 1, **characterized in that** the at least one region predefined on the steering wheel (1) is made visible by projecting a light marking onto it.

9. Method according to Claim 4 or 8, **characterized in that** the marking has the contour of a real operating element.

10. Method according to Claim 4 or 8, **characterized in that** the marking has the contour of a scroll wheel.

11. Method according to Claim 1, **characterized in that** the stored movement patterns substantially correspond to the movement in the case of an actuation of a scroll wheel.

12. Method according to Claim 11, **characterized in that** the evaluation unit (3) evaluates only movement patterns that substantially correspond to a scrolling movement on a real scroll wheel.

13. Method according to Claim 1, **characterized in that** the evaluation unit (3) evaluates only patterns if the steering angle and/or the steering angle change per unit time lies under a specified threshold value.

14. Method according to Claim 1, **characterized in that** the evaluation unit (3) is operatively connected to a feedback unit (5) such that, when a switching step is triggered, acoustic and/or optical and/or haptic feedback is given.

15. Method according to Claim 1, **characterized in that** the evaluation of the movement or gestures performed relative to the steering wheel (1) takes place on the basis of the start position thereof and/or movement direction and/or movement speed and/or change in the movement speed and/or end position and/or shape.

16. Method according to Claim 1, **characterized in that** the evaluation of the movement or gesture performed relative to the steering wheel (1) is started by an initial gesture and/or an acoustic input.

17. Arrangement for performing the method, **characterized in that**
- at least one sensor unit (2) is provided,
- the sensor unit (2) is directed at the steering wheel (1),
- an evaluation unit (3) evaluating the movement or gestures of the hand and/or the finger and/or the thumb in connection with the steering wheel (1) is provided,
- the sensor unit (2) captures movements or gestures of the hand and/or the finger and/or the thumb that are performed in contact with the real steering wheel in at least one region predefined on the steering wheel (1) and passes them on to the evaluation unit (3),
- the evaluation unit (3) compares captured movements or gestures performed relative to the steering wheel (1) to at least one predefined stored pattern and
- the evaluation unit (3) triggers a predefined switching step in the case of a match to the at least one pattern.

18. Arrangement according to Claim 17, **characterized in that** the sensor unit (2) itself is embodied such that it detects whether the hand and/or the finger and/or the thumb is located in the predefined contact region with respect to the steering wheel (1).

19. Arrangement according to Claim 17, **characterized in that** at least one projection unit (4) is provided that is directed at the steering wheel (1) and switchably makes the predefined region visible on the steering wheel (1) by projecting a light marking onto it.

20. Arrangement according to Claim 17, **characterized in that** a light-emitting device that switchably makes the predefined region visible on the steering wheel (1) by way of a light marking lighting up is provided on the steering wheel (1).

21. Arrangement according to Claim 17, **characterized in that** a steering angle sensor (19) is provided that transmits the steering angle and/or the steering angle change per unit of time to the evaluation unit (3) and **in that** the evaluation unit (3) checks whether the steering angle and/or the steering angle change per unit of time lies under a specified threshold value and **in that** the evaluation unit suppresses captured patterns if the threshold value is exceeded.

22. Arrangement according to Claim 17, **characterized in that** a feedback unit (5) that initiates acoustic and/or optical and/or haptic feedback if a switching step is triggered by the evaluation unit (3).

23. Vehicle, in particular commercial vehicle, in which a method according to one of Claims 1 to 16 is used or which comprises an arrangement according to one of Claims 17 to 22.

## Revendications

1. Procédé, permettant de commander des fonctions d'un véhicule automobile ou d'équipements compris dans celui-ci, dans lequel le mouvement ou le geste de la main et/ou des doigts et/ou du pouce est détecté au moyen d'une unité de détection disposée à proximité du volant, et en cas de corrélation entre les mouvements ou gestes et des mouvements ou gestes prédéfinis, celle-ci est évaluée comme un actionnement d'au moins un élément de réglage virtuel mais non réel, **caractérisé en ce que** ledit au moins un élément de réglage virtuel (12, 13, 33, 34, 37, 38, 38, 40) est défini sur le volant (1), et **en ce qu'**au moyen de l'unité de détection (2) orientée sur le volant (1) et d'une unité d'évaluation (3), le mouvement ou les gestes sont évalués en relation avec le volant (1) de telle sorte que
- l'unité de détection (2) détecte dans au moins une zone prédéfinie sur le volant (1) des mouvements ou gestes de la main et/ou des doigts et/ou du pouce qui sont effectués en contact avec le volant réel et les transmet à une unité d'évaluation (3),
- l'unité d'évaluation (3) compare des mouvements ou gestes détectés, effectués par rapport au volant (1), à au moins un schéma mémorisé prédéfini, et
- en cas de concordance prédéfinie avec ledit au moins un schéma, l'unité d'évaluation (3) déclenche une étape de commutation prédéfinie.

2. Procédé selon la revendication 1, **caractérisé en ce que** l'unité de détection (2) fournit une information à l'unité d'évaluation (3) indiquant si la main et/ou le doigt et/ou le pouce se trouvent dans la zone prédéfinie du volant (1), et **en ce que** l'unité d'évaluation (3), au cas où la main et/ou le doigt et/ou le pouce se trouvent dans la zone du volant (1), compare des mouvements et gestes détectés, effectués par rapport au volant (1), à au moins un schéma mémorisé prédéfini.

3. Procédé selon la revendication 1, **caractérisé en ce qu'**un capteur de contact séparé (20) fournit une information à l'unité d'évaluation (3) indiquant si la main et/ou le doigt et/ou le pouce se trouvent dans la zone de contact prédéfinie près du volant (1), et **en ce que** l'unité d'évaluation (3), au cas où la main et/ou le doigt et/ou le pouce se trouvent dans la zone de contact près du volant (1), compare des mouvements ou gestes détectés, effectués par rapport au volant (1), à au moins un schéma mémorisé prédéfini.

4. Procédé selon la revendication 1, **caractérisé en ce que** ladite au moins une zone prédéfinie sur le volant (1) est réalisée comme un marquage pouvant être distingué de manière haptique et/ou visuelle par rapport au reste du volant.

5. Procédé selon la revendication 4, **caractérisé en ce que** la possibilité de distinction haptique est donnée par des encoches tactiles et/ou des motifs et/ou des différences matérielles.

6. Procédé selon la revendication 4, **caractérisé en ce que** la possibilité de distinction visuelle est donnée par un contour visible et/ou un motif et/ou des marquages de couleur.

7. Procédé selon la revendication 1, **caractérisé en ce que** ladite au moins une zone prédéfinie sur le volant (1) est indépendante du braquage du volant (1) de telle sorte qu'en cas de braquages, elle reste à l'endroit qu'elle occupe dans une position de conduite en ligne droite du volant (1).

8. Procédé selon la revendication 1, **caractérisé en ce que** ladite au moins une zone prédéfinie sur le volant (1) est visualisée par la projection d'un marquage lumineux.

9. Procédé selon la revendication 4 ou 8, **caractérisé en ce que** le marquage présente le contour d'un élément de réglage réel.

10. Procédé selon la revendication 4 ou 8, **caractérisé en ce que** le marquage présente le contour d'une molette de défilement.

11. Procédé selon la revendication 1, **caractérisé en ce que** les schémas de déplacement mémorisés correspondent substantiellement au mouvement lors de l'actionnement d'une molette de défilement.

12. Procédé selon la revendication 11, **caractérisé en ce que** l'unité d'évaluation (3) n'évalue que des schémas de mouvement qui correspondent substantiellement à un mouvement de défilement sur une molette de défilement réelle.

13. Procédé selon la revendication 1, **caractérisé en ce que** l'unité d'évaluation (3) n'évalue des schémas que lorsque l'angle de direction et/ou la variation d'angle de direction par unité de temps sont situés sous une valeur seuil prédéfinie.

14. Procédé selon la revendication 1, **caractérisé en ce que** l'unité d'évaluation (3) est en liaison active avec une unité de retour (5) de telle sorte qu'un retour acoustique et/ou optique et/ou haptique est effectué lors du déclenchement d'une étape de commutation.

15. Procédé selon la revendication 1, **caractérisé en ce que** l'évaluation du mouvement ou des gestes effectués par rapport au volant (1) est effectuée à l'aide de la position de départ et/ou de la direction de mouvement et/ou de la vitesse de mouvement et/ou de la variation de la vitesse de mouvement et/ou de la position finale et/ou de la forme de ceux-ci.

16. Procédé selon la revendication 1, **caractérisé en ce que** l'évaluation du mouvement ou du geste effectué par rapport au volant (1) commence par un geste d'entrée et/ou une entrée acoustique.

17. Ensemble permettant d'effectuer le procédé, **caractérisé en ce que**
- au moins une unité de détection (2) est prévue,
- l'unité de détection (2) est dirigée sur le volant (1),
- une unité d'évaluation (3) est prévue qui évalue le mouvement ou les gestes de la main et/ou des doigts et/ou du pouce en relation avec le volant (1),
- l'unité de détection (2) détecte dans au moins une zone prédéfinie sur le volant (1) des mouvements ou des gestes de la main et/ou des doigts et/ou du pouce qui sont effectués en contact avec le volant réel et les transmet à l'unité d'évaluation (3),
- l'unité d'évaluation (3) compare des mouvements ou gestes détectés, effectués par rapport au volant (1), à au moins un schéma mémorisé prédéfini, et
- l'unité d'évaluation (3) déclenche une étape de commutation prédéfinie en cas de concordance avec ledit au moins un schéma.

18. Ensemble selon la revendication 17, **caractérisé en ce que** l'unité de détection (2) elle-même est réalisée de telle sorte qu'elle détecte si la main et/ou le doigt et/ou le pouce se trouvent dans la zone de contact prédéfinie près du volant (1).

19. Ensemble selon la revendication 17, **caractérisé en ce qu'**au moins une unité de projection (4) est prévue qui est dirigée sur le volant (1) et visualise de manière commutable la zone prédéfinie en projetant un marquage lumineux sur le volant (1).

20. Ensemble selon la revendication 17, **caractérisé en ce qu'**un dispositif lumineux est prévu sur le volant (1) qui visualise de manière commutable la zone prédéfinie en illuminant un marquage lumineux sur le volant (1).

21. Ensemble selon la revendication 17, **caractérisé en ce qu'**un capteur d'angle de direction (19) est prévu qui transmet à l'unité d'évaluation (3) l'angle de direction et/ou la variation d'angle de direction par unité de temps, et **en ce que** l'unité d'évaluation (3) vérifie si l'angle de direction et/ou la variation d'angle de direction par unité de temps se trouvent sous une valeur seuil prédéfinie, et **en ce que** l'unité d'évaluation supprime le schéma détecté si la valeur seuil est dépassée.

22. Ensemble selon la revendication 17, **caractérisé en ce qu'**une unité de retour (5) est prévue qui provoque un retour acoustique et/ou optique et/ou haptique lors du déclenchement d'une étape de commutation par l'unité d'évaluation (3).

23. Véhicule, en particulier véhicule utilitaire, utilisé dans un procédé selon l'une quelconque des revendications 1 à 16 ou comprenant un ensemble selon l'une quelconque des revendications 17 à 22.
